Europäisches Patentamt

European Patent Office

Office européen des brevets

(11) Numéro de publication: **0 316 235**

**A1**

## DEMANDE DE BREVET EUROPEEN

(21) Numéro de dépôt: **88402819.2**

(22) Date de dépôt: **09.11.88**

(51) Int. Cl.⁴: **B 62 D 6/02**

(30) Priorité: **10.11.87 FR 8715562**

(43) Date de publication de la demande:
**17.05.89 Bulletin 89/20**

(84) Etats contractants désignés:
**AT BE CH DE ES FR GB GR IT LI LU NL SE**

(71) Demandeur: **TRW FRANCE**
**97 rue de Verdun**
**F-92151 Suresnes Cédex (FR)**

**TRW ITALIA S.P.A.**
**Via Valtrompia 125**
**Gardone V.T. (BS) (IT)**

(72) Inventeur: **Bayle, Robert**
**122 rue de la République**
**F-78920 Ecquevilly (FR)**

**Da Forno, Antonio**
**Via Moro 9**
**Castiraga Vidardo Milano (IT)**

(74) Mandataire: **Rinuy, Santarelli**
**14, avenue de la Grande Armée**
**F-75017 Paris (FR)**

(54) **Ensemble de direction assistée pour véhicule.**

㉗ Un ensemble de direction assistée pour véhicule comportant un transducteur de vitesse (15) générant un signal fonction de la vitesse du véhicule et des moyens modulateurs (16,17) pour moduler le degré d'assistance de la direction, reliés au transducteur de vitesse et répondant audit signal de façon à réduire le degré d'assistance au fur et à mesure qu'augmente la vitesse du véhicule.

Afin que l'ensemble de direction soit simple, et donc fiable et économique, le transducteur de vitesse est un transducteur éolien adapté à s'éloigner d'une configuration de repos au fur et à mesure qu'augmente la vitesse du vent dans lequel il baigne, et à générer un signal fonction de son éloignement aux conditions de repos.

FIG. 1

EP 0 316 235 A1

Description

## Ensemble de direction assistée pour véhicule

La présente invention a trait à un ensemble de direction assistée pour véhicules dans lequel le degré d'assistance diminue au fur et à mesure qu'augmente la vitesse du véhicule.

On sait en effet qu'il est souhaitable que le degré d'assistance soit élevé quand le véhicule est pratiquement à l'arrêt, lors des manoeuvres nécessaires pour le garer, mais qu'en revanche il est préférable d'avoir un degré d'assistance très réduit à pleine vitesse, afin que le conducteur ait une bonne sensation de conduite (il ne doit pas ressentir la direction comme étant trop molle).

On connaît déjà par le brevet français 2.216.962, un tel ensemble qui comporte une source de pression hydraulique ; une barre de torsion reliant le volant au mécanisme démultiplicateur transmettant le mouvement aux roues ; une valve hydraulique rotative disposée sur cette barre de torsion et réagissant aux torsions que subit cette dernière du fait du couple exercé par le conducteur, en ajustant en sens et en amplitude le débit d'écoulement de fluide hydraulique entre la source de pression et des moyens d'application d'un effort d'assistance ; une source de pression hydraulique réagissant à la vitesse du véhicule ; et des moyens pour réduire la longueur efficace de la barre de torsion ou pour rendre progressivement solidaire cette dernière et un élément de la valve rotative, reliés à la source de pressio réagissant à la vitesse du véhicule, et répondant à la pression du fluide délivré par cette dernière.

Les ensembles de ce genre sont généralement considérés comme satisfaisants dans leur principe de fonctionnement, mais leur réalisation pratique reste relativement complexe, notamment en ce qui concerne la source de pression hydraulique réagissant à la vitesse du véhicule.

L'invention a pour objet de fournir une telle source de pression et, d'une façon plus générale, des transducteurs de vitesse générant un signal fonction de la vitesse du véhicule, qui soient particulièrement simples et par conséquent fiables et économiques.

L'invention vise également des moyens modulateurs pour moduler le degré d'assistance de la direction, qui aient les mêmes qualités.

L'invention propose à cet effet un ensemble de direction assistée pour véhicules comportant un transducteur de vitesse générant un signal fonction de la vitesse du véhicule et des moyens modulateurs pour moduler le degré d'assistance de la direction, reliés au transducteur de vitesse et répondant audit signal de façon à réduire le degré d'assistance au fur et à mesure qu'augmente la vitesse du véhicule ; caractérisé en ce que ledit transducteur de vitesse est un tranducteur éolien adapté à s'éloigner d'une configuration de repos au fur et à mesure qu'augemente la vitesse du vent dans lequel il baigne, et à générer un signal fonction de son éloignement aux conditions de repos.

On obtient la simplicité visée et les avantages qui en découlent principalement du fait que ce transducteur de vitesse n'a besoin d'aucune liaison avec un élément du véhicule ayant un mouvement rotatif fonction de sa vitesse (tel que les roues, la boîte de vitesse ou le moteur), mais doit simplement comporter un organe exposé au vent dans lequel baigne le véhicule.

Dans un mode de réalisation particulièrement avantageux par sa simplicité, le transducteur de vitesse éolien et les moyens modulateurs de l'assistance sont rassemblés en un seul bloc comportant un organe mobile destiné à être exposé au vent dans lequel baigne le véhicule et à être déplacé par l'effet aérodynamique associé, cet organe étant solidaire d'un élément mobile d'action des moyens modulateurs. Il n'y a en effet ainsi aucune transmission à prévoir entre le transducteur de vitesse et les moyens modulateurs.

Il peut cependant être intéressant, notamment pour des raisons de dispositions pratiques des moyens modulateurs et transducteurs de vitesse, de prévoir de les placer à distance l'un de l'autre, en les reliant mécaniquement, hydrauliquement, pneumatiquement, électriquement ou par tout autre moyen, le transducteur éolien comportant des moyens pour transformer un effet aérodynamique en signal mécanique (par exemple une position), hydraulique (par exemple une pression), pneumatique (par exemple une dépression), électrique (par exemple une tension ou une intensité) ou autre, tandis que les moyens modulateurs comportent un élément d'action répondant au signal transmis.

On observera qu'un ensemble de direction assistée ayant un élément d'action des moyens modulateurs solidaire d'un organe mobile destiné à être exposé au vent dans lequel baigne le véhicule, ne peut correspondre directement à l'ensemble de direction assistée connu par le brevet précité, étant donné que les éléments d'action de ces moyens modulateurs répondent à une pression hydraulique et que par conséquent le transducteur de vitesse doit nécessairement générer une pression hydraulique, c'est-à-dire que le signal fonction de la vitesse du véhicule ne peut simplement être la position de l'organe mobile destiné à être exposé au vent.

Dans ces conditions, l'invention propose, dans un système classique de direction assistée hydraulique -comportant une source de pression hydraulique ; une valve d'assistance reliée à cette source de pression, répondant en sens et en amplitude au couple exercé sur le volant par le conducteur du véhicule ; des moyens d'application d'un effort d'assistance, reliés à la valve d'assistance, cette dernière adjustant le débit d'écoulement de fluide en sens et en amplitude entre la source de pression et les moyens d'application d'un effort d'assistance en fonction du couple exercé par le conducteur -, que les moyens modulateurs comportent une valve hydraulique disposée sur une liaison entre des éléments hydrauliques de l'ensemble de direction, reliée au transducteur de vitesse éolien et répondant au signal généré par celui-ci en modifiant les caractéristiques d'écoulement de la liaison sur laquelle elle est disposée.

L'élément d'action mobile d'une valve peut en effet, sans difficulté, être rendu solidaire d'un organe se déplaçant sous l'action du vent ou être commandé mécaniquement, hydrauliquement, pneumatiquement ou électriquement. On notera d'ailleurs que de tels moyens modulateurs sont tout à fait utilisables avec des transducteurs de vitesse indépendants du vent.

Les caractéristiques, particularités et avantages de l'invention apparaîtront au cours de la description de modes particuliers de réalisation donnée ci-après à titre d'exemples non limitatifs, en regard des dessins annexés. Sur ces dessins :

- les figures 1 à 5 illustrent schématiquement des modes de réalisation d'un ensemble de direction assistée selon l'invention ;

- la figure 6 est une vue en couple longitudinale d'un ensemble compact rassemblant un transducteur éolien et des moyens modulateurs selon l'invention ;

- les figures 7 et 8 sont respectivement des vues de côté et de face d'un autre mode de réalisation d'un tel ensemble compact ;

- la figure 9 montre la superposition des orifices d'une partie fixe et d'une partie mobile de l'ensemble montré sur les figures 8 et 9 ;

- la figure 10 est une vue partielle analogue à la figure 8, montrant une variante de réalisation de l'ensemble montré sur les figures 7 et 8 ;

- la figure 11 est une vue en perspective d'un véhicule, montrant des exemples de dispositions de tranducteurs éolien ;

- la figure 12 est une vue de dessus d'un rétroviseur tel que celui dont est muni le véhicule de la figure 11, en coupe suivant un plan parallèle au sol, ce rétroviseur comportant un organe mobile faisant partie de moyens transducteur éoliens ;

- les figures 13 et 14 illustrent schématiquement des moyens pour transformer les mouvements de l'organe mobile du rétroviseur de la figure 12 respectivement en un signal hydraulique et mécanique, ces moyens étant reliés à des moyens modulateurs du degré d'assistance de la direction ;

- la figure 15 est une vue d'un conduit présentant un rétrécissement dont est muni le véhicule de la figure 11, en coupe suivant un plan longitudinal perpendiculaire au sol, et d'un moyen pour transformer la dépression ou la surpression régnant dans le rétrécissement lorsque l'air s'engoufre dans le conduit, en signal mécanique ;

- la figure 16 montre un moyen pour transformer une telle pression ou dépression en signal hydraulique ;

- les figures 17 et 18 sont respectivement des vues de côté et de face d'un autre transducteur de vitesse selon l'invention ;

- et les figures 19 et 20 illustrent schématiquement des modes de réalisation d'un ensemble direction assistée selon l'invention, comportant le transducteur illustré sur figures 17 et 18.

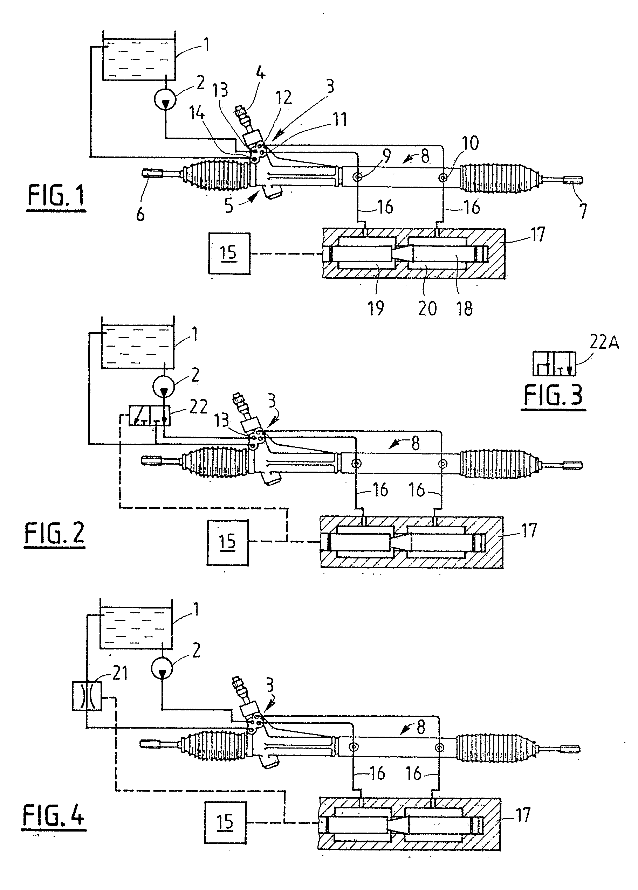

L'ensemble de direction assistée représenté sur la figure 1 comporte classiquement un réservoir 1 de fluide hydraulique et une pompe 2 reliée à ce réservoir, réalisant une source de pression hydraulique ; une valve d'assistance 3 disposée entre un arbre d'entrée 4, destiné à être relié au volant de direction du véhicule, et le mécanisme démultiplicateur de rotation proprement dit 5, qui transforme les mouvements rotatifs appliqués au volant et les transmet à un organe de sortie, ici une crémaillère dont les extrémités 6 et 7 sont destinées à agir sur les roues directrices du véhicule via une timonnerie de direction (non représentées) ; et des moyens d'application d'un effort d'assistance, ici un vérin hydraulique double effet 8, solidaire de la crémaillère, dont chacun des orifices 9 et 10 est relié aux orifices de sortie de la valve d'assistance 3, respectivement 11 et 12, tandis que les orifices d'entrée 13 et 14 de cette valve sont respectivement reliés à la pompe 2 et au réservoir 1. La valve 3, par exemple du type bien connu disposé sur une barre de torsion reliant l'arbre 4 (et donc le volant) au mécanisme démultiplicateur 5, répond en sens et en amplitude au couple exercé sur le volant par le conducteur du véhicule en ajustant en sens et en amplitude le débit d'écoulement de fluide entre la source de pression et le vérin 8, c'est-à-dire qu'un débit plus ou moins important de fluide en provenance de la pompe 2 passe à travers la valve 3 pour agir sur une des chambres du vérin 8 tandis qu'à partir de l'autre chambre de ce vérin un débit équivalent passe par la valve 3 pour rejoindre le réservoir 1, le fluide circulant des orifices 12 vers 10 et 9 vers 11 ou vice-versa suivant le sens du couple appliqué à l'arbre 4.

Conformément à l'invention, cet ensemble de direction comporte en outre un tranducteur de vitesse éolien 15 générant un signal fonction de la vitesse du véhicule, adapté à s'éloigner d'une configuration de repos au fur et à mesure qu'augmente la vitesse du vent dans lequel il baigne et à générer un signal fonction de son éloignement aux conditions de repos ; et des moyens modulateurs pour moduler le degré d'assistance de la direction, reliés au transducteur 15 et répondant au signal généré par celui-ci de façon à réduire le degré d'assistance au fur et à mesure que le transducteur s'éloigne des conditions de repos.

Dans cet exemple de réalisation, ces moyens modulateurs comportent une liaison de bipasse 16 disposée par rapport à la valve d'assistance 3 en parallèle au vérin 8 et sur cette liaison est disposée une valve 17 reliée au transducteur éolien 15 et répondant au signal généré par celui-ci en s'ouvrant au fur et à mesure qu'augmente la vitesse du vent dans lequel il est plongé (et donc la vitesse du véhicule) : aux très basses vitesses, le tiroir 18 est dans la position représentée sur la figure 1, où il obture la communication entre les chambres 19 et 20 de la valve 17, et ferme donc la liaison de bipasse 16, tandis qu'au fur et à mesure qu'augmente la vitesse, le tiroir 18 se déplace vers la droite de la figure, et ouvre donc progressivement la liaison de bipasse jusqu'à l'ouvrir complètement aux très grandes vitesses. Ainsi, à très faibles vitesses toute la puissance hydraulique est transmise au vérin 8, tandis qu'aux très grandes vitesses les deux chambres du vérin sont portées à la même pression, il n'y a donc plus d'effort d'assistance appliqué à la direction.

A titre d'exemple, les moyens tranducteurs de vitesse de modulateurs du degré d'assistance pourront être adaptés à ce que la direction soit à peu près complètement assistée jusqu'à des vitesses de 50 à 60 kilomètres/heure, puis que le degré d'assistance diminue progressivement de façon à ce que la direction soit pratiquement manuelle à partir de vitesses de l'ordre de 90 kilomètres/heure.

La figure 4 montre une variante de réalisation de l'ensemble de direction de la figure 1, qui comporte en plus une valve de restriction 21 disposée sur la liaison connectant la valve d'assistance 3 au réservoir de fluide hydraulique 1, reliée au transducteur de vitesse éolien 15 et se fermant au fur et à mesure qu'augmente la vitesse du véhicule. La pression de fluide hydraulique augmente donc en amont de la restriction 21 au fur et à mesure qu'augmente la vitesse du véhicule, c'est-à-dire dans pratiquement tout le circuit hydraulique de l'ensemble de direction, et par conséquent dans les deux chambres du vérin 8, ce qui a pour effet de dynamiser le joint assurant l'étanchéité entre le piston et le cylindre du vérin 8, le joint se pressant vigoureusement contre le cylindre, ce qui influe sur le couple à exercer sur le volant de direction pour manoeuvrer la direction, puisqu'il faut alors vaincre la résistance supplémentaire associée. On obtient ainsi un durcissement de la direction, en quelque sorte une assistance négative, favorable à la précision de conduite à haute vitesse.

La figure 2 montre une autre variante de réalisation de l'ensemble montré sur la figure 1, qui comporte en plus une valve 22 disposée sur la liaison hydraulique reliant la source de pression et la valve d'assistance 3, connectée également à un conduit de retour au réservoir de fluide hydraulique 1, reliée au tranducteur éolien 15 et répondant au signal généré par celui-ci en détournant progressivement la source de pression vers le réservoir au fur et à mesure qu'augmente la vitesse du véhicule.

Dans cet exemple, l'orifice de la valve 22 relié à l'orifice d'entrée 13 de la valve 3 est bouché lorsque le véhicule est à pleine vitesse, mais celà ne peut conduire à un blocage du vérin 8 et donc de la direction, étant donné que les deux chambres du vérin sont alors en communication par la valve 17, et que par conséquent le fluide hydralique circule sans difficulté d'une chambre à l'autre du vérin, en passant par la liaison de bipasse 16, grande ouverte.

Dans une variante de cet ensemble de direction, on remplace la valve 22 par la valve 22A montrée sur la figure 3, qui relie aussi l'orifice 13 de la valve 3 au réservoir 1, à pleine vitesse, ce qui permet de supprimer la liaison de bipasse 16 munie de la valve 17, si on désire avoir un ensemble de direction ayant une structure aussi simple que possible.

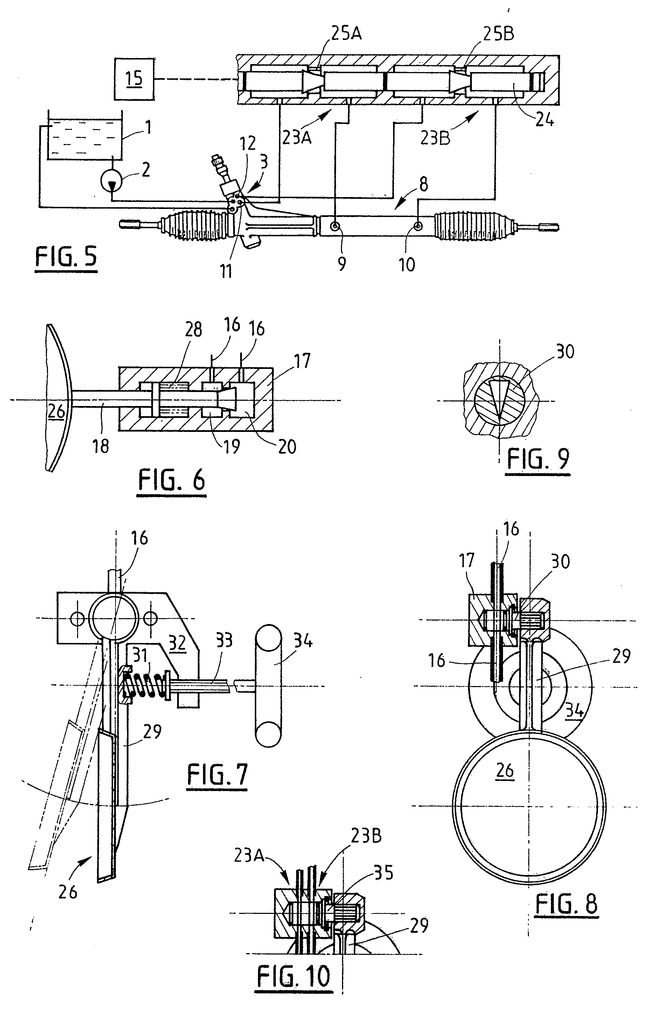

La figure 5 montre une autre variante de l'ensemble de direction représenté sur la figure 1, dans laquelle les moyens modulateurs comportent, non plus une liaison de bipasse 16 munie d'une valve 17, mais dans laquelle les moyens modulateurs comportent sur chacune des deux liaisons reliant respectivement les orifices 11 et 12 de la valve d'assistance aux orifices 9 et 10 du vérin 8, une valve de restriction 23A et 23B reliée au tranducteur de vitesse 15 et répondant au signal généré par celui-ci en se fermant au fur et à mesure qu'augmente la vitesse du vent dans lequel il est plongé (et donc la vitesse du véhicule) : aux basses vitesses, le tiroir 24 est dans la position représentée sur la figure 5, où les communications entre la valve 3 et le vérin 8 sont pleinement ouvertes, tandis qu'au fur et à mesure qu'augmente la vitesse, le tiroir 24 se déplace vers la droite de la figure et restreint progressivement les communications entre la valve 3 et le vérin 8, qui ne sont plus assurées qu'à travers les saignées 25A et 25B lorsque le tiroir 24 est pleinement déplacé vers la droite.

Ainsi, à très faible vitesse, toute la puissance hydraulique est transmise au vérin 8 tandis qu'à grande vitesse le débit possible est très réduit. Les lumières 25A et 25B sont indispensables pour éviter le bloquer le vérin 8 (et donc la direction), et permettent suivant leurs sections, d'obtenir aussi l'effet de durcissement de la direction précité, à pleine vitesse.

On notera qu'ici le tiroir 24 est commun aux valves 23A et 23B, il est en effet intéressant que les éléments d'action mobiles de ces valves soient solidaires, on obtient en effet ainsi relativement facilement l'équilibre nécessaire entre les restrictions de chacune des liaisons valve 3-vérin 9, sans lequel l'effet d'assistance serait plus élevé dans un sens de braquage que dans l'autre.

On observera que les moyens modulateurs de degré d'assistance précédemment décrits comportent tous une valve hydraulique disposée sur une liaison entre des éléments hydrauliques de l'ensemble de direction, reliée au transducteur de vitesse éolien et répondant au signal généré par celui-ci en modifiant les caractéristiques d'écoulement de la liaison sur laquelle elle est disposée ; et que, suivant les caractéristiques d'assistance visées pour la direction, il peut être avantageux de combiner deux des moyens modulateurs de degré d'assistance précédemment décrits, comme dans l'exemple où la valve 22A est combinée à la liaison de bipasse 16 à valve 17, ou même plus de deux de ces moyens, qui sont tous combinables.

La figure 6 illustre une valve 17 et un transducteur de vitesse éolien rassemblés en un ensemble monobloc comportant un organe mobile 26 destiné à être exposé au vent dans lequel baigne le véhicule et à être déplacé par l'effet aérodynamique associé, cet organe étant solidaire du tiroir 18 réalisant un élément mobile d'action de la valve 17. Ici l'organe mobile 26 est une paroi soumise à des forces élastiques, par le ressort 28, la sollicitant vers une position de repos, illustrée sur la figure 6. L'élément monobloc est destiné à être disposé sur le véhicule de façon à ce que le vent dans lequel il baigne se déplace essentiellement, relativement à la paroi 26, de la gauche vers la droite de la figure 6, c'est-à-dire que cette paroi est destinée à être exposée au vent dans lequel baigne le véhicule de façon à ce que l'effet aérodynamique associé sollicite cette paroi à l'encontre des forces élastiques du ressort 28, et par conséquent la déplace vers la droite de la figure 6, ce qui déplace le tiroir 18 de la façon indiquée en référence à la figure 1.

Dans une variante d'un tel ensemble monobloc, montrée sur les figures 7 et 8, la valve 17 est rotative au lieu d'être linéaire : la paroi 26 n'est pas disposée coaxialement à un tiroir 27, mais est fixée sur un bras 29 monté à rotation coaxialement à un rotor distributeur 30 de la valve 17, un ressort 31 étant disposé entre ce bras 29 et une patte de fixation 32 de l'ensemble monobloc sur le véhicule. En l'absence de vent, le bras 29 et la paroi 26 sont dans la position représentée en traits mixtes sur la figure 7, tandis qu'à fond de course ils sont dans la position représentée en traits pleins lorsque le vent auquel est soumis la paroi 26 se déplace à haute vitesse. C'est dans cette position qu'est représentée en couple la valve 17 sur la figure 8, où la liaison de bipasse 16 est pleinement ouverte, alors qu'elle se ferme progressivement lorsque le vent diminue.

Pour obtenir de la progressivité dans le fonctionnement de la valve 17, et donc de la progressivité pour les moyens modulateurs du degré d'assistance de la direction, le tiroir 30 présente un orifice triangulé (voir figure 9), ou le clapet du tiroir 18 est en tronc de cône alors que l'orifice entre les chambres 19 et 20 est cylindrique, c'est-à-dire, d'une façon plus générale, que cette valve comporte un orifice rond coopérant avec un élément triangulé.

Le ressort 31 est lié à la patte 32 par l'intermédiaire d'une tige filetée 33 liée à une molette de manoeuvre 34 qui permet de régler l'intensité de la force de rappel du ressort 31. La molette est disposée de préférence dans le poste de conduite du véhicule, afin que le conducteur puisse adapter la réponse des moyens modulateurs du degré d'assistance de la direction aux conditions spécifiques de conduite du véhicule, notamment sa charge, les conditions atmosphériques (vent), et la nature du terrain sur lequel roule le véhicule (neige, boue, verglas, ...).

La figure 10 montre une variante d'un tel ensemble monobloc rotatif, où le levier 29 commande un tiroir 35 commun aux valves de restriction 23A et 23B, illustré en position de repos (qui correspond à la position illustrée en traits mixtes sur la figure 7).

On notera que de tels modes de réalisation, où les valves de modulation sont rotatives, offrent l'avantage de bénéficier d'un bras de levier entre l'effort appliqué par le vent et les forces élastiques, qui favorisent la réalisation de l'équilibrage entre ces forces antagonistes.

Dans d'autres variantes de réalisation d'un ensemble monobloc, on remplace la valve 17 par n'importe laquelle des valves ou combinaison de valves faisant partie des moyens modulateurs précédemment décrits, de façon à ce que les moyens modulateurs réduisent le degré d'assistance de la direction au fur et à mesure que la paroi mobile s'éloigne de sa position de repos, suivant les caractéristiques recherchées.

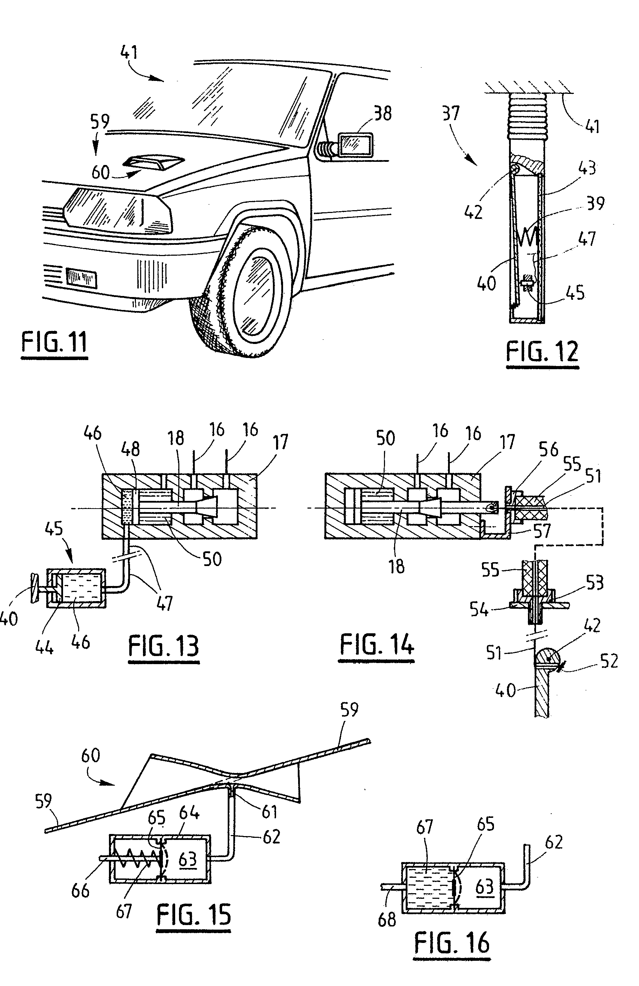

Il peut également être intéressant pour des raisons pratiques que le tranducteur éolien 15 et les moyens modulateurs du degré d'assistance de la direction soient placés à distance l'un de l'autre, notamment si l'on désire obtenir une exposition maximum au vent du transducteur éolien en le disposant sur un élément du véhicule en saillie par rapport à la carrosserie, tel que le rétroviseur 38 du véhicule 41 montré sur la figure 11. Un rétroviseur 37 spécialement adapté à cet effet est montré sur la figure 12. Il comporte une paroi mobile 40 articulée en 42, soumise aux forces élastiques d'un ressort 39 disposé entre cette paroi et le miroir 43 du rétroviseur, lequel ressort 39 sollicite la paroi 40 vers la position de repos représentée sur la figure 12. Lorsque le véhicule circule, la paroi 40, placée en avant du rétroviseur 37, est exposée au vent, qui a un déplacement relatif par rapport au rétroviseur de la gauche vers la droite de la figure 12, l'effet aérodynamique associé sollicite donc la paroi 40 vers la droite de la figure 12, c'est-à-dire à l'encontre du ressort 39, et la paroi 40 se déplace en tournant autour de l'axe 42 dans le sens inverse des aiguilles d'une montre au fur et à mesure qu'augmente la vitesse du vent.

La paroi mobile 40 actionne un piston 44 d'un vérin 45 (voir figure 13) lié hydrauliquement, par un fluide 46 et un conduit hydraulique 47, à un piston 48 lié à un élément mobile d'action des moyens modulateurs, ici un tiroir 18 de la valve 17 mobile à l'encontre d'un ressort 50, ces éléments étant représentés en position de repos sur la figure 13. Lorsque la paroi 40 se déplace sous l'effet du vent, le piston 44 est déplacé vers la droite de la figure 13, ce mouvement est transmis au tiroir 18 qui se déplace également vers la droite en ouvrant progressivement la valve 17.

On notera, si l'on désire rendre l'ensemble de direction le plus simple possible, que le ressort 50, à condition qu'il ait une raideur appropriée, est susceptible de jouer aussi le rôle du ressort 39, qui peut alors être supprimé.

Dans une variante montrée sur la figure 14, la paroi 40 est reliée par câble au tiroir 18 de la valve 17 : un câble 51 est monté sur la paroi 40 en passant à travers celle-ci et en étant bloqué par un serre-câble 52 de façon à ce que lorsque la paroi 40 tourne autour de l'axe 42 dans le sens inverse des aiguilles d'une montre, le câble 51 soit tiré vers le bas de la figure 14. Ce câble 51 pénètre ensuite dans un embout de gaine 53 à position réglable par rapport à son support 54 grâce à leur coopération par filetage (on visse ou on dévisse l'embout 53 sur la support 54 pour le rapprocher ou l'éloigner du support 54), puis dans une gaine 55 qui le conduit jusqu'aux moyens modulateurs comportant la valve 17, où le câble est fixé au tiroir 18 tandis que l'embout de gaine 56 porte sur une patte 57 solidaire du corps des moyens modulateurs.

Ainsi, lorsque le vent éloigne la paroi 40 de sa position de repos, le tiroir 49 est tiré vers la droite de la figure 14, et ouvre alors progressivement la valve 17.

On notera que l'embout de gaine réglable 53 est disposé de préférence de façon à être accessible depuis le poste de conduite du véhicule, afin que le conducteur puisse adapter le degré de modulation des moyens d'assistance aux conditions de circulation du véhicule, de la même façon qu'avec la mollette 34.

En variante, il est également possible de prévoir des moyens de transmissions pneumatiques ou électriques entre la paroi 40 et le tiroir 18, de placer la paroi 40 dans de nombreuses autres situations que dans un rétroviseur, ou d'utiliser directement un autre élément en saillie à l'extérieur de l'automobile, par exemple son antenne de radio.

En outre, il est clair que la valve 17 est aisément remplaçable par n'importe laquelle des valves ou combinaison de valves faisant partie des moyens modulateurs précédemment décrits, de façon à ce que les moyens modulateurs réduisent le dégré d'assistance de la direction au fur et à mesure que la paroi mobile s'éloigne de sa position de repos, suivant les caractéristiques recherchées.

Selon une autre version, le transducteur éolien comporte un conduit présentant un rétrécissement disposé par exemple de l'extérieur vers l'intérieur du capot avant du véhicule, ainsi que montré sur la figure 11 pour le conduit 60 par rapport au capot 59, afin que du vent dans lequel baigne le véhicule s'y engoufre et crée une surpression puis une dépression au voisinage du rétrécissement, à la façon bien connue des tubes de venturi.

Dans l'exemple de réalisation de la figure 15, un orifice 61 est ménagé dans le rétrécissement et est connecté par un conduit pneumatique 62 à une chambre 63 d'un cylindre 64 fermé par une membrane élastique 65 lié à une tige 66 sollicitée contre la membrane par un ressort 67. La position de la membrane 65 lorsque la chambre 63 est à la pression atmosphérique est montrée en traits pleins tandis qu'est montrés en traits interrompus la position qu'elle prend quand la chambre 63 est en dépression, c'est-à-dire quand le vent circule dans le conduit 60, de la gauche vers la droite de la figure 15 (elle serait en surpression pour le sens inverse, compte tenu de la position de l'orifice 61 par rapport au rétrécissement). La tige 66, qui se déplace quand la membrane se déforme, vers la droite de la figure 15 quand la chambre 63 est en dépression, est liée à un élément mobile des moyens modulateurs de façon non représentée. Dans le cas de la valve 17, la tige 66 est directement solidaire du tiroir 18, ou y est reliée par un câble de façon similaire à celle montrée sur la figure 14, en fonction des conditions pratiques.

Dans une variante montrée sur la figure 16, la membrane 65 agit sur des moyens modulateurs similaires à ceux montrés sur la figure 13, auxquels est relié le conduit hydraulique 68, qui transmet le mouvement de la membrane 65 par le fluide 67.

Dans une version non représentée, destinée à être montée sur un véhicule comportant un moteur diesel muni d'une pompe à vide, des moyens réglables depuis le poste de conduite du véhicule, sont prévus pour connecter cette pompe à vide au conduit pneumatique 62 reliant l'orifice 61 à la chambre 63 à membrane élastique 65, afin d'adapter l'intensité des moyens d'assistance aux conditions précitées de circulation du véhicule. De façon plus générale, on notera qu'une telle mesure peut être mise en pratique sur toute liaison pneumatique en dépression, reliant le transducteur éolien et les moyens modulateurs du dégré d'assistance de la direction.

Dans d'autres variantes de réalisation comportant un conduit présentant un rétrécissement, on remplace la valve 17 par n'importe laquelle des valves ou combinaison de valves faisant partie des moyens modulateurs précédemment décrits, de façon à ce que les moyens modulateurs réduisent le degré d'assistance de la direction au fur et à mesure que la paroi mobile s'éloigne de sa position de repos, suivant les caractéristiques recherchées. On notera qu'en outre des liaisons mécanique et hydraulique illustrées, il est aussi possible de réaliser électriquement la liaison entre la membrane 65 du cylindre 64 et les moyens modulateurs du degré d'assistance, par exemple grâce à une jauge de contraintes placée sur la membrane 65, à une valve modulatrice à commande électrique et à des moyens électroniques associés.

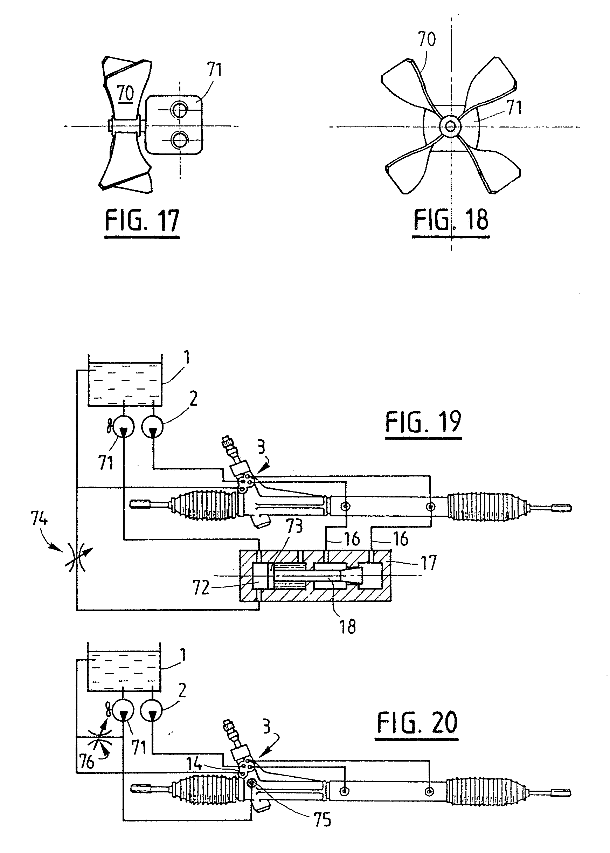

Les figures 17 et 18 montrent une autre version de moyens transducteurs de vitesse éoliens, qui comportent une hélice 70 destinée à être mise en rotation sous l'effet du vent dans lequel baigne le véhicule. Dans la version représentée, ces moyens transducteurs comportent également une pompe hydraulique rotative 71 entraînée par l'hélice. L'ensemble de direction assistée montré sur la figure 19 est conforme à l'ensemble montré sur la figure 1, le tiroir 18 est commandé par la pompe 71 qui est reliée au réservoir 1 et délivre de la pression à une chambre 72 fermée par piston 73 solidaire du tiroir 18, cette chambre 72 étant reliée au réservoir 1 par un conduit présentant une restriction 74, afin de mettre en pression la chambre 72. Ainsi, plus l'hélice 70 tourne vite, plus le tiroir 18 est déplacé vers la droite de la figure 19. Le réservoir 1 est ici commun aux pompes 71 et 2, pour des raisons de simplicité, mais il est naturellement possible de prévoir des réservoirs de fluide séparés. Des équivalents pneumatiques sont également utilisables.

Dans une version des moyens transducteurs à hélice non représentée, la pompe 71 est remplacée par une génératrice électrique rotative, qui génère un signal électrique fonction de la vitesse de rotation de l'hélice, tandis que la valve 17, reliée à cette génératrice, est à commande électrique.

Dans une autre version, l'hélice et la valve 17 sont rassemblées en un ensemble monobloc comportant entre l'hélice et le tiroir 18, un ensemble transformant un mouvement de rotation en un déplacement axial fonction de la vitesse de rotation, par exemple du genre décrit dans le brevet anglais 1.293.192, ou bien l'hélice est reliée mécaniquement (par exemple par courroie) à un tel ensemble.

Dans d'autres variantes de réalisation où l'on utilise des moyens transducteurs à hélice, on remplace la valve 17 par n'importe laquelle des valves ou combinaison de valves faisant partie des moyens modulateurs précédemment décrits, de façon à ce que les moyens modulateurs réduisent le degré d'assistance de la direction au fur et à mesure que la paroi mobile s'éloigne de sa position de repos, suivant les caractéristiques recherchées.

L'ensemble de direction assistée représenté sur la figure 20 comporte, en outre des éléments d'une direction assistée hydraulique classique, des moyens modulateurs ayant un élément d'action à commande hydraulique, intégrés à la valve 3, reliés au transducteur éolien, et répondant au signal généré par celui-ci en réduisant la réponse de la valve d'assistance au couple exercé sur le volant au fur et à mesure qu'augmente la vitesse du véhicule, par exemple ceux connus par le brevet français 2.216.262, qui sont alimentés en pression hydraulique par un orifice supplémentaire 75, le fluide rejoignant le réservoir classiquement par l'orifice 14.

Cet orifice 75 est ici relié à la pompe 71, elle-même reliée au réservoir 1 à son orifice d'entrée, ainsi qu'à son orifice de sortie par une liaison de bipasse munie d'une restriction réglable 76, qui permet d'ajuster de façon générale la pression appliquée à l'orifice 75 par la pompe 71. L'ensemble hélice 10-pompe 71 réalise en effet de façon particulièrement simple une source de pression hydraulique réagissant à la vitesse du véhicule.

On notera que les moyens modulateurs commandés par l'orifice 75 sont parfaitement combinables avec les moyens modulateurs précédemment décrits, qui comportent une valve hydraulique disposée sur une liaison entre des éléments hydrauliques de l'ensemble de direction, reliée au transducteur de vitesse éolien et répondant au signal généré par celui-ci en modifiant les caractéristiques d'écoulement de la liaison sur laquelle elle est disposée.

Les restrictions 74 et 76 sont de préférence réglables à partir du poste de conduite du véhicule, pour les raisons précitées.

Bien entendu, l'invention ne se limite pas aux modes de réalisation décrits et représentés sur les figures, mais englobe au contraire toutes les variantes que l'homme de métier pourra déterminer.

## Revendications

1. Ensemble de direction assistée pour véhicule comportant un transducteur de vitesse générant un signal fonction de la vitesse du véhicule et des moyens modulateurs pour moduler le degré d'assistance de la direction, reliés au transducteur de vitesse et répondant audit signal de façon à réduire le degré d'assistance au fur et à mesure qu'augmente la vitesse du véhicule ; caractérisé en ce que ledit transducteur de vitesse est un tranducteur éolien (15 ; 26, 18, 28 ; 26, 29, 31 ; 39, 40, 44, 46 ; 39, 40, 51 ; 60, 62, 64 ; 70, 71) adapté à s'éloigner d'une configuration de repos au fur et à mesure qu'augmente la vitesse du vent dans lequel il baigne, et à générer un signal fonction de son éloignement aux conditions de repos.

2. Ensemble selon la revendication 1, caractérisé en ce que le transducteur éolien (26, 18, 28 ; 26, 29, 31) et les moyens modulateurs (16, 17 ; 23A, 23B ; 22 ; 22A) sont rassemblés en un seul bloc comportant un organe mobile (26) destiné à être exposé au vent dans lequel baigne le véhicule et à être déplacé par l'effet aérodynamique associé, cet organe étant solidaire d'un élément mobile d'action (18) des moyens modulateurs.

3. Ensemble selon la revendication 1, caractérisé en ce que le transducteur éolien (39, 40, 44, 46 ; 39, 40, 51) et les moyens modulateurs (16, 17 ; 23A, 23B ; 22 ; 22A) sont placés à distance l'un de l'autre et sont reliés mécaniquement, hydrauliquement, pneumatiquement, électriquement ou par tout autre moyen.

4. Ensemble selon l'une quelconque des revendications 1 à 3 caractérisé en ce que ledit transducteur éolien comporte une paroi mobile (26, 40) soumise à des forces élastiques la sollicitant vers une position de repos, destinée à être exposée au vent dans lequel baigne le véhicule de façon à ce que l'effet aérodynamique associé sollicite cette paroi à l'encontre desdites forces élastiques, ledits moyens modulateurs (16, 17 ; 23A, 23B ; 22 ; 22A) réduisant le degré d'assistance de la direction au fur et à mesure que la paroi mobile (26, 40) s'écarte de la position de repos.

5. Ensemble selon l'une quelconque des revendications 1 à 3, caractérisé en ce que ledit transducteur éolien comporte un conduit (60) présentant un rétrécissement, destiné à ce que du vent dans lequel baigne le véhicule s'y engoufre et crée une surpression puis une dépression au voisinage du rétrécissement, lesdits moyens modulateurs (16, 17 ; 23A, 23B ; 22 ; 22A) réduisant le degré d'assistance de la direction au fur et à mesure que s'élève cette surpression ou cette dépression.

6. Ensemble selon l'une quelconque des revendications 1 à 3, caractérisé en ce que ledit transducteur éolien comporte une hélice (70), destinée à être mise en rotation sous l'effet du vent dans lequel baigne le véhicule, lesdits moyens modulateurs (16, 17 ; 23A, 23B ; 22 ; 22A, 75) réduisant le degré d'assistance de la direction au fur et à mesure que s'élève la vitesse de rotation de cette hélice.

7. Ensemble selon l'une quelconque des revendications 1 à 6, caractérisé en ce qu'il comporte une source de pression hydraulique (1, 2) ; une valve d'assistance (3) reliée à cette source de pression, répondant en sens et en amplitude au couple exercé sur le volant par le conducteur du véhicule ; des moyens (8) d'application d'un effort d'assistance, reliés à la valve d'assistance (3), cette dernière ajustant le débit d'écoulement de fluide en sens et en amplitude entre la source de pression (1, 2) et les moyens (8) d'application d'un effort d'assistance en fonction du couple exercé par le conducteur ; et en ce que les moyens modulateurs comportent une valve (17 ; 23A, 23B ; 22 ; 22A) hydraulique disposée sur une liaison entre des éléments hydrauliques de l'ensemble de direction, reliée au transducteur de vitesse éolien (15 ; 26, 18, 28 ; 26, 29, 31 ; 39, 40, 44, 46 ; 39, 40, 51 ; 60, 62, 64 ; 70, 71) et répondant au signal généré par celui-ci en modifiant les caractéristiques d'écoulement de la liaison sur laquelle elle est disposée.

8. Ensemble selon la revendication 1, caractérisé en ce qu'il comporte une source de pression hydraulique (1, 2) ; une valve d'assistance (3) reliée à cette source de pression, répondant en sens et en amplitude au couple exercé sur le volant par le conducteur du véhicule ; des moyens (8) d'application d'un effort d'assistance, reliés à la valve d'assistance (3), cette dernière ajustant le débit d'écoulement de fluide en sens et en amplitude entre la source de pression (1,2) et les moyens (8) d'application d'un effort d'assistance en fonction du couple exercé par le conducteur ; en ce que ledit transducteur éolien (70,71) génère un signal hydraulique ; et en ce que les moyens modulateurs comportent des moyens d'action à commande hydraulique, intégrés à la valve d'assistance, reliés au transducteur éolien et répondant au signal généré par celui-ci en réduisant la réponse de la valve d'assistance (3) au couple exercé sur le volant au fur et à mesure qu'augmente la vitesse du véhicule.

9. Ensemble selon l'une quelconque des revendications 7 ou 8, caractérisé en ce que lesdits moyens modulateurs comportent une liaison de bipasse (16) disposée par rapport à la valve d'assistance (3) en parallèle aux moyens (8) d'application d'un effort d'assistance, sur laquelle liaison (16) est disposée une valve (17) reliée au transducteur de vitesse éolien (15 ; 26, 18, 28 ; 26, 29, 31 ; 39, 40, 44, 46 ; 39, 40, 51 ; 60, 62, 64 ; 70, 71) et répondant au signal généré par celui-ci en s'ouvrant au fur et à mesure qu'augmente la vitesse du véhicule.

10. Ensemble selon l'une quelconque des revendications 7 à 9, caractérisé en ce que lesdits moyens modulateurs comportent sur chacune des deux liaisons reliant la valve d'assistance (3) aux moyens (8) d'application d'un effort d'assistance, une valve de restriction (23A, 23B) reliée au transducteur de vitesse éolien (15 ; 26, 18, 28 ; 26, 29, 31 ; 39, 40, 44, 46 ; 39, 40, 51 ; 60, 62, 64 ; 70, 71) et répondant au signal généré par celui-ci en se fermant au fur et à mesure qu'augmente la vitesse du véhicule.

11. Ensemble selon l'une quelconque des revendications 7 à 10, caractérisé en ce que lesdits moyens modulateurs comportent une valve (22, 22A) disposée sur la liaison hydraulique reliant la source de pression (1, 2) et la valve d'assistance, connectée également à un conduit de retour au réservoir (1) de fluide hydraulique, reliée au transducteur éolien (15 ; 26, 18, 28 ; 26, 29, 31 ; 39, 40, 44, 46 ; 39, 40, 51 ; 60, 62, 64 ; 70, 71) et répondant au signal généré par celui-ci en détournant progressivement la source de pression vers le réservoir (1) au fur et à mesure qu'augmente la vitesse du véhicule.

12. Ensemble selon la revendication 7, caractérisé en ce que ladite valve hydraulique (17 ; 23A, 23B ; 22, 22A) des moyens modulateurs comporte un orifice rond coopérant avec un élément triangulé, afin d'avoir une progressivité dans l'effet de la valve.

13. Ensemble selon la revendication 9, caractérisé en ce que les moyens modulateurs comportent en outre une valve de restriction (21) disposée sur la liaison connectant la valve d'assistance (3) au réservoir de fluide hydraulique (1), reliée au transducteur de vitesse éolien (15 ; 26, 18, 28 ; 26, 29, 31 ; 39, 40, 44, 46 ; 39, 40, 51 ; 60, 62, 64 ; 70, 71) et se fermant au fur et à mesure qu'augmente la vitesse du véhicule.

14. Ensemble selon la revendication 4, caractérisé en ce que ladite paroi mobile (26, 40) est soumise à des forces élastiques de rappel d'un ressort (28, 31, 39), et en ce qu'il comporte des moyens (34, 53) pour régler la force de rappel de ce ressort depuis le poste de conduite du véhicule.

15. Ensemble selon la revendication 3, caractérisé en ce que ledit transducteur éolien comporte une paroi mobile (40) soumise à des forces élastiques la sollicitant vers une position de repos, destinée à être exposée au vent dans lequel baigne le véhicule de façon à ce que l'effet aérodynamique associé sollicite cette paroi à l'encontre desdites forces élastiques ; et en ce que lesdits moyens modulateurs comportent un élément mobile d'action relié par câble (51) à ladite paroi mobile.

16. Ensemble selon la revendication 15, caractérisé en ce que ledit câble (51) est disposé dans une gaine (55) dont une extrémité porte sur un embout de gaine (53) à position réglable depuis le poste de conduite du véhicule.

17. Ensemble selon la revendication 3, caractérisé en ce que ledit transducteur éolien comporte une paroi mobile (40) soumise à des forces élastiques la sollicitant vers une position de repos, destinée à être exposée au vent dans lequel baigne le véhicule de façon à ce que l'effet aérodynamique associé sollicite cette paroi à l'encontre desdites forces élastiques ; et en ce que lesdits moyens modulateurs comportent un élément mobile d'action (18, 24) lié à un piston hydraulique (48), ladite paroi mobile (40) du tranducteur éolien actionnant un piston (44) lié hydrauliquement au piston (48) des moyens modulateurs.

18. Ensemble selon l'une quelconque des revendications 14 à 17, caractérisé en ce que ladite paroi mobile (40) fait partie d'un rétroviseur (37) de véhicule.

19. Ensemble selon la revendication 3, caractérisé en ce que ledit transducteur éolien comporte un conduit (60) présentant un rétrécissement, destiné à ce que du vent dans lequel baigne le véhicule s'y engouffre et crée une surpression puis une dépression au voisinage du rétrécissement, un orifice (61) étant ménagé dans ce rétrécissement, cet orifice étant connecté par un conduit pneumatique (62) à une chambre (63) d'un cylindre fermé par une membrane élastique (65) liée à un élément mobile d'action (18, 24) desdits moyens modulateurs.

20. Ensemble selon la revendication 19, caractérisé en ce qu'il est destiné à être monté sur un véhicule comportant un moteur diesel muni d'une pompe à vide, en ce que l'orifice (61) est ménagé dans la zone du rétrécissement où l'air engoufré dans le conduit crée une dépression ; et en ce qu'il comporte des moyens, réglables depuis le poste de conduite du véhicule, pour connecter ladite pompe à vide au conduit pneumatique (62) reliant l'orifice à la chambre (63) à membrane élastique dudit cylindre.

21. Ensemble selon la revendication 3, caractérisé en ce que ledit transducteur éolien comporte une hélice (70) destinée à être mise en rotation sous l'effet du vent dans lequel baigne le véhicule, ainsi qu'une pompe hydraulique (71) rotative entraînée par cette hélice ; et en ce que lesdits moyens modulateurs (16, 17 ; 23A, 23B ; 22 ; 22A, 75) comportent un élément mobile d'action (18, 24) à commande hydraulique relié à cette pompe.

22. Ensemble selon la revendication 3, caractérisé en ce que ledit transducteur éolien comporte une hélice, destinée à être mise en rotation sous l'effet du vent dans lequel baigne le véhicule, ainsi qu'une génératrice électrique rotative entraînée par cette hélice ; et en ce que lesdits moyens modulateurs (16, 17 ; 23A, 23B ; 22 ; 22A) comportent un élément mobile d'action à commande électrique relié à cette génératrice.

FIG.1

FIG.2

FIG.3

FIG.4

FIG. 5

FIG. 6

FIG. 9

FIG. 7

FIG. 8

FIG. 10

FIG. 11

FIG. 12

FIG. 13

FIG. 14

FIG. 15

FIG. 16

FIG. 17

FIG. 18

FIG. 19

FIG. 20

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 598 993 (PEUGEOT)<br>* Revendications; figures *<br>--- | 1-4,7,8 | B 62 D    6/02 |
| A | PATENT ABSTRACTS OF JAPAN, vol. 18, no. 140 (M-305)[1577], 29 juin 1984; & JP-A-59 38 120 (DIESEL KIKI K.K.) 01-03-1984<br>--- | 1 | |
| D,A | GB-A-1 293 192 (CAM GEARS)<br>--- | | |
| D,A | FR-A-2 216 162 (CAM GEARS)<br>----- | | |

DOMAINES TECHNIQUES
RECHERCHES (Int. Cl.4)

B 62 D
B 60 K
B 60 H

Le présent rapport a été établi pour toutes les revendications

| Lieu de la recherche | Date d'achèvement de la recherche | Examinateur |
|---|---|---|
| LA HAYE | 08-02-1989 | PIRIOU J.C. |

EPO FORM 1503 03.82 (P0402)